# EUROPEAN PATENT APPLICATION

(11) **EP 1 876 478 A1**
(43) Date of publication of application: **09.01.2008**
(21) Application number: 07111754.3
(22) Date of filing: 04.07.2007
(51) Int. Cl.: G02B 5/30, B26D 7/01

(54) **Method of manufacturing a polarizing plate, and a cutting mat used in the method**

(30) Priority: 04.07.2006 JP 2006184274
(71) Applicant: NITTO DENKO CORPORATION, Ibaraki-shi, Osaka 567-8680 (JP)
(72) Inventor: Moriyama, Junichi, IBARAKI-SHI Osaka 567-8680 (JP)
(74) Representative: Intes, Didier Gérard André

(57) **Abstract**

A method of manufacturing a polarizing plate in which an original polarizing plate is cut accurately, cracks are not extended easily in a section and foreign substances are not attached easily on a polarizing plate to be obtained, and a cutting mat to be used in the method are provided. An original polarizing plate having a plurality of layers is fixed on a first principal surface of an ultrahigh molecular weight polyethylene porous sheet (1) by drawing from the opposite side. The original polarizing plate (2) is cut by a blade (4) moving across the thickness of the original polarizing plate by using the porous sheet (1) as a cutting mat to obtain a polarizing plate (3) having a plurality of layers. A curable liquid, such as ultraviolet curable ink, is impregnated in vacant pores of the porous sheet (1), and is cured to obtain a sheet. The sheet thus obtained is particularly suitable for a cutting mat.

## Description

The present invention relates to a method of manufacturing a polarizing plate by cutting an original polarizing plate having a plurality of layers and it further relates to a cutting mat used in the method. In this specification, an original polarizing plate is defined as a polarizing plate before cutting so that it can be distinguished from a polarizing plate after cutting.

A polarizing plate installed in a liquid crystal displaying device may be manufactured by cutting an original polarizing plate into a predetermined size, depending on the intended size. An original polarizing plate and a polarizing plate generally have a plurality of layers to provide various functions. Rotary blades are not suitable for cutting an original polarizing plate for such reasons that cutting with them requires a cutting margin, swarf from the cutting easily attaches to products due to static attraction and the cutting cannot easily ensure dimension accuracy. Therefore, original polarizing plates are cut with a so-called guillotine cut. A guillotine cut is carried out by moving a blade across the thickness of an original polarizing plate, which is the object to be cut.

A guillotine cut puts large pressure on a surface of an original polarizing plate that the blade contacts at the moment when the blade starts cutting in the original polarizing plate. As a result, the original polarizing plate is raised at the edge away from the part pressed by the blade, for example at an opposite end from the end where the cutting is started, and it tends to cause a cutting not having the desired dimension, a fracture developing in the section (extension of cracks in the section) and layers being separated. Considering this, the edge of the original polarizing plate is fixed on a cutting mat commonly with a tape.

A cutting mat used for general purposes often employs a resin sheet such as vinyl chloride resin (for example, JP2003-71960A).

When fixing edges of the original polarizing plate on a cutting mat with a tape, the part cut off from the fixed part with the tape becomes unfixed in the original polarizing plate. Accordingly, when cutting such unfixed part, an edge of the original plate easily raises similar to above, and it tends to cause problems, such as a cutting not having the desired dimension and cracks extending in the section. In addition, since fixing with a tape requires some space on the surface of the original polarizing plate, it becomes difficult to cut out polarizing plates efficiently from the original polarizing plate. Moreover, the slide of the original polarizing plate caused by the thickness of the blade when the blade penetrates may or may not be restricted by the tape depending on the point where the blade gets in, i.e., the point to be cut. This causes uneven slides of the original polarizing plate, and thus the accuracy of dimension cannot be maintained at a high standard.

Alternatives may be considered in which an original polarizing plate is drawn from underneath for fixation on an air-permeable sheet used as a cutting mat. Since paper and nonwoven fabric themselves have air permeability, they can be used as a mat for fixing the original polarizing plate by suction. However, there is a problem when they are used as a cutting mat, due to paper particles or fibers being attached on the polarizing plate in the case of paper or nonwoven fabric, respectively. When using paper, particular problems may result from impurities mixed from liquid pulp for making paper and foreign substances reclaimed with waste paper. When using nonwoven fabric, problems may be caused by paraffins added as extrusion aids and antioxidants. These attached substances may cause display defects or display distortion in a liquid crystal displaying device in which the polarizing plate is installed.

A cutting mat for fixing an original polarizing plate by suction can be made by providing a large number of pores in a resin sheet such as the sheet disclosed in JP2003-71960A. However, it causes a problem due to swarf remaining from the pore-making process being attached on the polarizing plate similar to the paper particles from paper and the fibers from nonwoven fabric.

Giving consideration to the above issues, it is an object of the present invention to provide a method of manufacturing a polarizing plate in which an original polarizing plate is cut accurately, cracks are not extended easily in a section and foreign substances are not attached easily on a polarizing plate to be obtained.

Another object of the present invention is to provide a cutting mat suitable for this manufacturing method.

The present invention provides a method of manufacturing a polarizing plate including fixing an original polarizing plate, having a plurality of layers, on a first principal surface of an ultrahigh molecular weight polyethylene porous sheet by drawing from a second principal surface located on a side opposite to the first principal surface, and obtaining a polarizing plate, having a plurality of layers, by cutting the original polarizing plate with a blade for moving across a thickness of the original plate using the porous sheet as a cutting mat.

From another aspect, the present invention provides a cutting mat for cutting an original polarizing plate using an ultrahigh molecular weight polyethylene porous sheet. From still another aspect, the present invention provides a cutting mat for cutting an original polarizing plate, the mat obtained by impregnating a curable liquid in vacant pores of the ultrahigh molecular weight polyethylene porous sheet followed by curing the curable liquid. These cutting mats can be used suitably in the manufacturing method of the present invention.

In the manufacturing method of the present invention, an original polarizing plate is cut by using an ultrahigh molecular weight polyethylene porous sheet as a cutting mat. Ultrahigh molecular weight polyethylene porous sheets are excellent in wear resistance and do not generate swarf easily even when a blade gets in partly. Thus, foreign substances are not easily attached on the polarizing plate.

In addition, since ultrahigh molecular weight polyethylene porous sheets have a low frictional coefficient, they are likely to allow an original polarizing plate horizontal movement that is required by a thickness of a blade when the blade penetrates vertically. Although this movement is minute, it is desirable for it to be accommodated for a highly accurate cutting. Thus, the manufacturing method of the present invention is also suitable for achieving highly accurate cutting dimension.

Moreover, ultrahigh molecular weight polyethylene porous sheets have a high elastic modulus (compressive modulus). When a blade presses a part of an original polarizing plate, such property enables reducing the level of lowering in the part. As the lowering level is reduced, an edge of the original plate can be inhibited from raising. Thus, according to the manufacturing method of the present invention, it becomes possible to improve accuracy in cutting dimension and inhibit the extension of cracks in a section.

Still further, since ultrahigh molecular weight polyethylene porous sheets themselves are permeable to air, they function as a cutting mat for fixing an original polarizing plate by suction without creating through holes. Thus, the manufacturing method of the present invention does not cause swarf by a pore making process attaching on a polarizing plate.

Fig. 1 is a cross-sectional view of an ultrahigh molecular weight polyethylene porous sheet.

Fig. 2 is a cross-sectional view illustrating a state of fixing an original polarizing plate, by suction, on a first principal surface of the ultrahigh molecular weight polyethylene porous sheet.

Fig. 3 is a cross-sectional view illustrating a state of cutting the original polarizing plate.

Hereinbelow, preferred embodiments of the present invention are illustrated with reference to the figures.

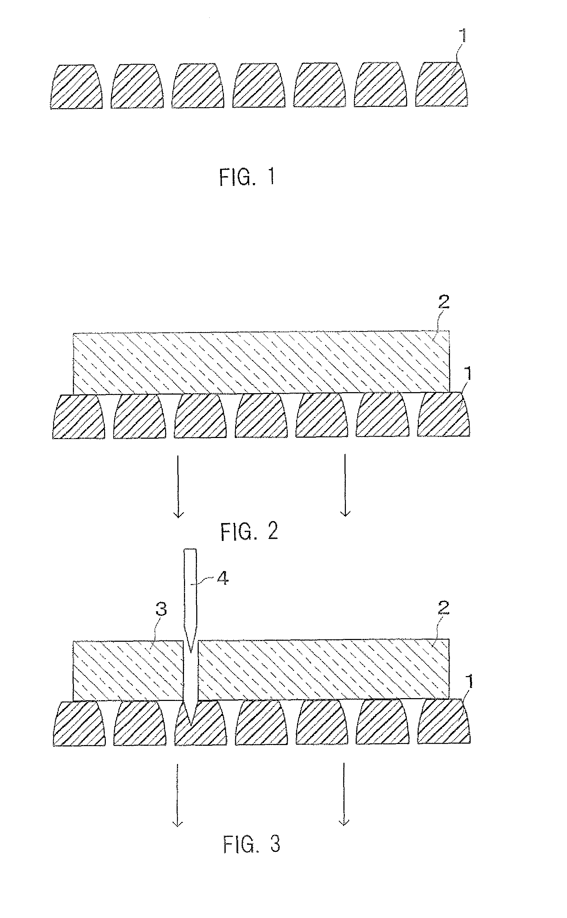

An ultrahigh molecular weight polyethylene porous sheet 1 is prepared (Fig. 1) for fixing an original polarizing plate 2 on a first principal surface of the porous sheet 1 (Fig. 2). The original polarizing plate 2 is fixed by drawing from a second principal surface located on the opposite side of the porous sheet 1 (refer to the arrows in Fig. 2). The original polarizing sheet 2 is composed of a plurality of layers to provide a desired function.

In this state, the original polarizing plate 2 is cut with a single blade 4 for a guillotine cut to obtain a polarizing plate 3. An edge of the single blade 4 penetrates the original polarizing plate 2 from its upper surface (a principal surface unsupported by the porous sheet 1) towards its lower surface (a principal surface supported by the porous sheet 1), and it passes through the lower surface to reach all the way to the inside of the porous sheet 1 finally. In this way, the original polarizing plate 2 is cut by the single blade 4 moving across the thickness of the original polarizing plate 2.

The part pressed by the single blade 4 generally defines a straight line on a principal surface of the original polarizing plate. The original polarizing plate 2 may have a plurality of cutting plane lines, and each line is defined to extend in a form of a straight line on the principal surface of the original plate. The cutting plane lines may be aligned, for example, parallel to each other or in a grid. The original polarizing plate 2 is cut along each cutting plane line for formation of polarizing plates. Embodiments of the present invention are, needless to say, not limited to this. The present invention can be applied to various cutting embodiments using a variety of blades as long as the cutting mat employs an ultrahigh molecular weight polyethylene porous sheet and the original polarizing plate is cut by a blade moving across the thickness of the original plate.

The viscosity average molecular weight of the ultrahigh molecular weight polyethylene resin composing of the ultrahigh molecular weight polyethylene porous sheet 1 is preferably equal to or more than one million, for example in a range from one million to seven million. The compressive modulus of the porous sheet 1 (in accordance with JIS K6911; based on a slope of graph within elastic limit in a stress-time graph obtained by compressing three stacked sheets each having a thickness of 2 mm) is preferably in a range from 100 kgf/cm² to 1000 kgf/cm², particularly in a range from 200 kgf/cm² to 400 kgf/cm². The average pore diameter of the porous sheet 1 is preferably in a range from 10 µm to 100 µm, specifically in a range from 15 µm to 40 µm. The air permeability of the porous sheet 1 is preferably in a range from 0.5 cm³/cm²**·** second to 20 cm³/cm²**·** second, particularly from 1 cm³/cm²**·** second to 5 cm³/cm²**·** second, indicated by measured values based on the Frazier Permeability Test (JIS L1096). The Shore hardness (nail indentation hardness; Shore D) is preferably in a range from 30 to 52. The thickness of the porous sheet 1 is preferably in a range from 0.05 mm to 0.5 mm, specifically from 0.1 mm to 0.3 mm. The coefficient of dynamic friction of the porous sheet 1 (in accordance with JIS K7125; measured with a Bowden-Leben type testing meter with an iron ball of a 10 mm diameter adhered a PET film thereon that has a width of 2 mm and a thickness of 50 µm) is preferably equal to or less than 0.3, specifically equal to or less than 0.18.

The ultrahigh molecular weight polyethylene porous sheet 1 itself has a high elastic modulus, and the modulus may be improved further by impregnating a curable liquid in vacant pores followed by curing it. In this case, the impregnation amount of the curable liquid is adjusted to maintain the air permeability of the porous sheet 1. The enhancement of the elastic modulus by the cured liquid enables preventing the raising at the edge with more certainty when the blade 4 makes contact with the original polarizing plate 2 to start cutting in.

The curable liquid is not particularly limited, but for example, ultraviolet, curable ink is preferable. The curable liquid is not limited to this, and it can employ epoxy ink, for example.

### EXAMPLES

Hereinbelow, the present invention is described further in detail with Examples. It should be noted that the present invention is not limited to the Examples described below.

### Example 1

An ultrahigh molecular weight polyethylene porous sheet ("SUNMAP" manufactured by Nitto Denko Corporation; viscosity average molecular weight of six million, compressive modulus of 250 kgf/cm², average pore diameter of 17 µm, thickness of 0.3 mm, Shore hardness of 48, coefficient of dynamic friction of 0.08) is prepared as a cutting mat to fix a four-layered original polarizing plate on the porous sheet. The original polarizing plate was fixed by drawing the original polarizing plate through the porous sheet from under the porous sheet.

Subsequently, a guillotine blade (a single blade) having an angle on the edge at 25 degrees was moved from above the original polarizing plate through it at a speed of 50 mm/second for cutting the original polarizing plate. At this point, the guillotine blade was moved to have the edge reach the depth of 0.1 mm below a surface of the porous sheet. This operation was repeated to make cutting plane lines on the original polarizing plate parallel and evenly spaced relative to each other, and thus ten polarizing sheets for a three-inch liquid crystal displaying device were obtained.

The maximum crack depth developed in the section of the polarizing plates, a cutting dimension error and appearance were evaluated using an optical microscope. Results of the evaluation are shown in Table 1. Here, the cutting dimension error means a ratio (%) of difference between designed dimension and actual size to the designed dimension in the direction orthogonal to the cutting plane line.

### Example 2

Ultraviolet curable ink ("Daicure Ink" manufactured by Dainippon Inc and Chemicals, Inc.) was impregnated in vacant pores in the same ultrahigh molecular weight polyethylene porous sheet used in the Example 1. The ultraviolet curable ink was cured by irradiation of an ultraviolet lamp to obtain an ink impregnated porous sheet. By the same process as the Example 1 other than employing this ink impregnated porous sheet as a cutting mat, ten polarizing sheets were obtained. In addition, the maximum crack depth developed in the section of the polarizing plates, a cutting dimension error and appearance were evaluated in the same way as the Example 1. Results of the evaluation are shown in Table 1.

### Comparative Example 1

By the same process as the Example 1 other than employing a polystyrene porous sheet as a cutting mat, ten polarizing sheets were obtained. This porous sheet was prepared by providing many minute pores with a polystyrene sheet ("Nippla Sheet" manufactured by Nippon Plastic Kogyo K.K.; 0.3 mm in thickness). In addition, the maximum crack depth developed in the section of the polarizing plates, a cutting dimension error and appearance were evaluated in the same way as the Example 1. Results of the evaluation are shown in Table 1.

### Comparative Example 2

By the same process as the Example 1 other than employing a recycled woodfree paper (0.3 mm in thickness) as a cutting mat, ten polarizing sheets were obtained. In addition, the maximum crack depth developed in the section of the polarizing plates, a cutting dimension error and appearance were evaluated in the same way as the Example 1. Results of the evaluation are shown in Table 1.

**TABLE 1.**

| | Maximum Crack Depth (mm) | Dimension Error (%) | Appearance | Overall Evaluation |
|---|---|---|---|---|
| Example 1 | 0.14 | 0.2 | No Problem | Good |
| Example 2 | 0.13 | 0.2 | No Problem | Good |
| Comparative Example 1 | 0.14 | 0.5 | No Problem | Poor |
| Comparative Example 2 | 0.15 | 0.4 | Fiber Attached | Poor |

As shown in Table 1, the Comparative Example 1 had the large dimension error, and in the Comparative Example 2 the maximum crack depth and the dimension error became large and a problem arose in appearance. The Examples 1 and 2 could inhibit the maximum crack depth of the polarizing plate and the dimension error to a level not becoming a problem in practical use. The Example 2 had a particularly small maximum crack depth in the section.

As described above, the present invention provides a method of manufacturing a polarizing plate in which an original polarizing plate is cut accurately, cracks are not extended easily in a section and foreign substances are not attached easily on a polarizing plate to be obtained, and thus the present invention is industrially useful.

The invention may be embodied in other forms without departing from the essential characteristics thereof. The embodiments disclosed in this application are to be considered in all respects as illustrative and not limiting. The scope of the invention is indicated by the appended claims rather than by the foregoing description, and all changes which come within the meaning and range of equivalency of the claims are intended to be embraced therein.

## Claims

1. A method of manufacturing a polarizing plate, obtaining a polarizing plate having a plurality of layers by cutting an original polarizing plate having a plurality of layers with a blade for moving across a thickness of the original plate, the method being **characterized in that** it comprises:
fixing the original polarizing plate (2) on a first principal surface of an ultrahigh molecular weight polyethylene porous sheet (1) by drawing from a second principal surface located on the opposite side of the first principal surface; and
cutting the original polarizing plate with the blade (4) using the porous sheet as a cutting mat.

2. The method of manufacturing a polarizing plate according to claim 1, wherein the ultrahigh molecular weight polyethylene porous sheet (1) employs a porous sheet obtained by impregnating a curable liquid in vacant pores of an ultrahigh molecular weight polyethylene porous sheet followed by curing the curable liquid.

3. The method of manufacturing a polarizing plate according to claim 2, wherein the curable liquid is ultraviolet curable ink.

4. A cutting mat for cutting an original polarizing plate (2) **characterized in that** it comprises an ultrahigh molecular weight polyethylene porous sheet (1).

5. A cutting mat for cutting an original polarizing plate (2), **characterized in that** the mat is obtained by impregnating a curable liquid in vacant pores of the ultrahigh molecular weight polyethylene porous sheet (1) followed by curing the curable liquid.

6. The cutting mat for cutting an original polarizing plate (2) according to claim 5, wherein the curable liquid is ultraviolet curable ink.
